# FASCICULE DE BREVET EUROPEEN

(11) **EP 2 746 089 B1**
(45) Date de publication et mention de la délivrance du brevet: **04.05.2016**
(21) Numéro de dépôt: 13198434.6
(22) Date de dépôt: 19.12.2013
(51) Int. Cl.: B60K 35/00, G02B 27/01, B60R 11/02, B60R 11/00

(54) **Support de boîtier d'affichage escamotable dans un véhicule et véhicule correspondant**
Versenkbare Halterung für Anzeigegehäuse in einem Fahrzeug, und entsprechendes Fahrzeug
Mounting for retractable display housing in a vehicle and corresponding vehicle

(30) Priorité: 21.12.2012 FR 1262712
(43) Date de publication de la demande: 25.06.2014
(73) Titulaire: PEUGEOT CITROËN AUTOMOBILES SA, 78140 Vélizy-Villacoublay (FR)
(72) Inventeur: Mention, Cedric, 93420 Villepinte (FR)

(56) Documents cités:
- DE-A1-102005 028 282
- DE-A1-102011 008 770

## Description

L'invention concerne un support de boîtier d'affichage escamotable notamment pour l'assembler facilement dans sa position d'utilisation et en cas de panne ou de maintenance, de l'extraire sans difficulté.

Dans l'état de la technique, les boîtiers d'affichage sont fixés sur la liaison de traverse interne de baie. Le dispositif est posé dans le logement en le passant au-dessus de la planche de bord. Après assemblage, un enjoliveur vient obturer le logement pour accroître la qualité perçue. En cas de panne ou de maintenance de l'afficheur, il est nécessaire de le démonter. Cette opération peut s'avérer délicate et difficile compte tenu de la proximité du pare-brise pour le passage et la manoeuvre des outils et la dépose du boîtier d'affichage. Dans l'état de la technique, le document DE102005028282 décrit un agencement de planche de bord intégrant un support comportant un boîtier d'affichage comprenant une source lumineuse destinée à produire une information à afficher et un affichage escamotable réfléchissant l'information vers le conducteur du véhicule. Le boîtier d'affichage est introduit au-dessus de la planche de bord à l'aide d'un dispositif de guidage comprenant une structure de réception et un ergot engagé dans une glissière à l'intérieur de la dite planche de bord.
Le document DE102007010381 décrit un dispositif d'affichage à lentilles dont le boîtier est monté ou démontable depuis la façade de la planche de bord. Le démontage est réalisé, en ayant démonté préalablement le combiné d'instrumentation afin d'accéder au boîtier d'affichage placé sous la lentille qui reste fixée dans une position déterminée. Le boîtier est donc désolidarisé de la lentille afin de le libérer puis de l'extraire par l'ouverture laissée libre par l'enlèvement du combiné. En sens inverse, le boîtier peut être remonté en procédant de la même manière. Dans cette configuration de dispositif d'affichage, le boîtier est directement fixé derrière le combiné sous la lentille. Dans le cas de l'invention, le boîtier génère l'affichage sur une lame escamotable dans le boîtier, par conséquent le boîtier doit être disposé juste sous la peau de la planche de bord de manière à extraire la lame réfléchissant les informations vers le conducteur du véhicule, à travers une fente disposée sensiblement de façon verticale au-dessus de la planche de bord.

On comprend bien que les connaissances du document cité décrivent le moyen d'extraire un boîtier placé juste derrière le combiné mais ne propose pas de solution lorsque le boîtier est placé de façon décalé vers le haut, derrière le combiné en contact avec la peau de la planche de bord.

La présente invention vise à pallier cet inconvénient en proposant un support de boîtier d'affichage, adaptable de manière à extraire ou à monter le boîtier d'affichage sur la face de la planche de bord et plus précisément par l'ouverture laissé libre par les combinés ayant été préalablement démontés.

A cet effet l'invention propose un support de boîtier d'affichage comportant un boîtier d'affichage comprenant une source lumineuse destinée à engendrer une information à afficher et un affichage escamotable réfléchissant l'information vers le conducteur du véhicule, le support (1) du boîtier d'affichage (2) comporte une base disposé dans une première position pliée sensiblement à angle droit quand il est en service et dans une seconde position dépliée à plat lorsqu'il est configuré pour démonter le boîtier d'affichage (2).

Avantageusement, le support comprend un plateau se prolongeant par un volet.

Selon une variante, le volet est mobile autour d'une charnière liée au plateau.

Selon un autre mode de réalisation de l'invention, le plateau et le volet du support sont disposés à angle droit lorsque le boîtier d'affichage est en service.

De manière optionnelle, le plateau et le volet du support sont alignés lorsqu'ils sont configurés pour démonter le boîtier d'affichage.

Selon un mode de réalisation préféré de l'invention, le plateau possède une liaison pivotante autour d'un axe à son extrémité arrière.

Selon une variante, le plateau comprend un rack de maintien du boîtier d'affichage.

Avantageusement, le boîtier est fixé sur le rack par des vis en façade.

De façon avantageuse, le plateau et le volet du support sont disposés à angle droit et maintenus par des vis en façade en prise dans des goussets du plateau et dans la traverse interne de baie.

L'invention concerne également un véhicule comportant un support de boîtier d'affichage, ayant les caractéristiques susmentionnées.

L'invention sera bien comprise et d'autres aspects et avantages apparaîtront clairement à la lecture de la description qui suit donnée à titre d'exemple par rapport aux figures annexées sur lesquelles :
- la figure 1 présente une vue schématique de profil d'un support de boîtier d'affichage comprenant un boîtier d'affichage dans sa position de service intégré dans le poste de conduite ;
- la figure 2 présente une vue schématique de profil d'un support de boîtier d'affichage comprenant un boîtier d'affichage dans une position configuré pour démonter le boîtier d'affichage, pour l'extraire du poste de conduite, suivant l'invention.

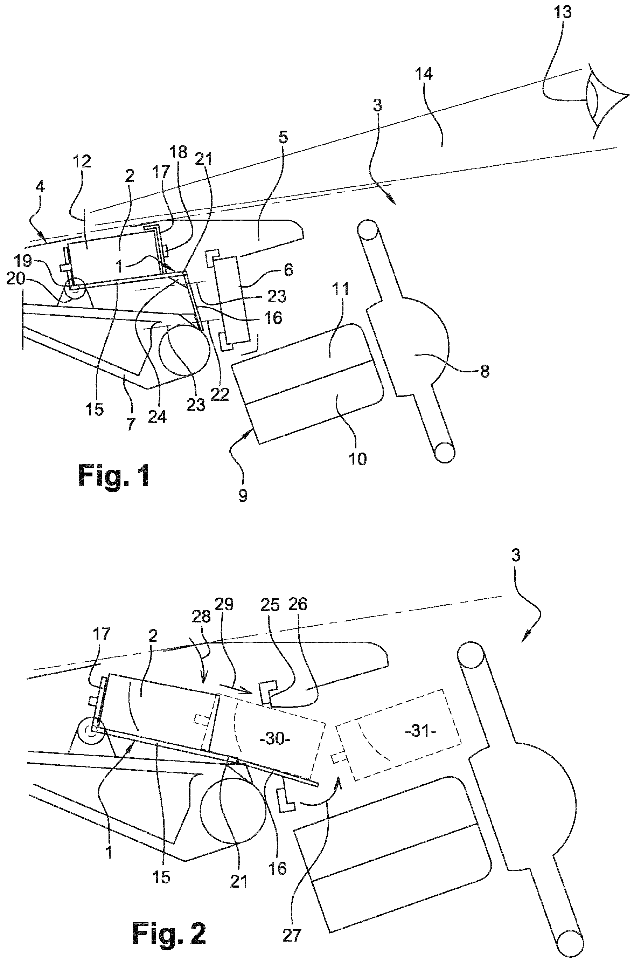

La figure 1 présente une vue schématique de profil d'un support 1 de boîtier d'affichage comprenant un boîtier d'affichage 2 dans sa position de service intégré dans le poste de conduite 3. Le poste de conduite 3 comprend généralement une planche de bord 4 surmonté d'une casquette 5 au niveau du combiné d'instrumentation 6 regroupant les différents indicateurs et paramètres du véhicule. En particulier, la casquette 5 surplombe le combiné 6 et protège la lecture du combiné 6 des rayonnements parasites, afin de fournir un bon contraste. La planche de bord 4 est soutenue et assemblée sur la traverse interne de baie 7. La colonne de direction (non représentée) passe sous la traverse interne de baie 7 pour recevoir le volant 8 du véhicule. Derrière le volant 8, le haut de la colonne de direction est masqué par un carénage 9 constitué d'une gaine inférieure 10 et d'une gaine inférieure 11. Le support 1 est intégré dans la planche de bord 4 et reçoit le boîtier 2 d'affichage de manière que sa surface supérieure soit positionnée sous la peau de la planche de bord 4. La peau de la planche de bord 4 comporte une fente dans laquelle se déploie la lame escamotable 12, au-dessus de la planche de bord 4, dans le champ 14 de vision des yeux 13 du conducteur qui consulte les informations affichées sur la lame 12 sans quitter la route des yeux. Le support 1 peut être installé avant de monter la planche de bord 4, il est constitué d'une base en deux parties, un plateau 15 et un volet 16. Le plateau 16 comporte un rack 17 destiné à recevoir le boîtier d'affichage 2. Le boîtier d'affichage 2 comporte sur sa façade des bordures en saillie à l'avant et il est glissé dans le rack 17 pour venir en butée sur des rebords du rack 17. Des vis 18 viennent en prise dans les rebords du rack 17, depuis les bordures de la façade du boîtier d'affichage 2 pour le maintenir dans une position déterminée. L'arrière du plateau 16 est monté pivotant sur un axe 19 venant se fixer dans des alésages de pattes 20 solidaires de la traverse interne de baie 7. A l'avant, le volet 16 comporte une charnière 21 qui est conçu par une diminution de matière à l'intersection du plateau 15, de cette façon, le volet 16 peut être placé dans le prolongement du plateau ou rabattu suivant la charnière 21. Dans sa configuration de maintien du boîtier d'affichage 2, le volet 16 du support 1 est placé sensiblement à angle par rapport au plateau 15 de manière à positionner le boîtier d'affichage 2 sous la peau de la planche de bord 4 est à fixer le volet 16 à son extrémité par des vis 22 en prise sur un bossage 23 de la traverse interne de baie 7 et des vis 23 en prise dans des goussets 24 à proximité de la charnière 21 du support 1. Le volet 16 est placé juste derrière le combiné 6, ainsi lorsque le combiné 6 est démonté, le volet 16 est directement accessible par l'ouverture laissée libre.

La figure 2 présente une vue schématique de profil d'un support 1 comprenant un boîtier d'affichage 2 dans une position configurée pour démonter le boîtier d'affichage 2, pour l'extraire du poste de conduite 3, suivant l'invention. Pour effectuer l'opération de démontage du boîtier d'affichage 2, le combiné a été préalablement démonté de son cadre 25 ménageant une ouverture 26 en vis-à-vis du volet 16. Comme montré sur la figure 1, le volet 16 est accessible par l'ouverture 26. Le démontage des vis 22, 23 (visible sur la figure 1) permet de libérer le volet 16 qui peut tourner autour de sa charnière 21 suivant la flèche 27. Simultanément, le plateau 16 pivote autour de l'axe 19 suivant la flèche 28, ce qui permet de dégager le dessus du boîtier d'affichage 2 de son contact avec la peau de la planche de bord. Cette opération amène l'extrémité du plateau 15 à proximité de la charnière 21, en appui sur le dessus de la traverse interne de baie 7 et le volet 16 dans le prolongement du plateau 16 dont l'extrémité traverse l'ouverture 26 laissée libre par l'enlèvement du combiné. Dans cette position, il suffit de démonter les vis 18 (visible figure 1) maintenant le boîtier d'affichage 2 dans le rack 17, puis de glisser le boîtier d'affichage 2 sur le volet 16 suivant la flèche 29, en position 30, (représenté en traits interrompus) pour le passer à travers l'ouverture 26, puis de le saisir manuellement dans sa position 31 (représenté en traits interrompus). Pour effectuer le remontage, l'opération est réalisée en sens inverse.

## Revendications

1. Support (1) comportant un boîtier d'affichage (2) comprenant une source lumineuse destinée à engendrer une information à afficher et un affichage escamotable réfléchissant l'information vers le conducteur du véhicule, **caractérisé en ce que** le support (1) du boîtier d'affichage (2) comporte une base disposé dans une première position pliée sensiblement à angle droit quand il est en service et dans une seconde position dépliée à plat lorsqu'il est configuré pour démonter le boîtier d'affichage (2).

2. Support (1) selon la revendication 1, **caractérisé en ce que** le support (1) comprend un plateau (15) se prolongeant par un volet (16).

3. Support (1) selon l'une quelconque des revendications 1 ou 2, **caractérisé en ce que** le volet (16) est mobile autour d'une charnière (21) liée au plateau (15).

4. Support (1) selon l'une quelconque des revendications précédentes, **caractérisé en ce que** le plateau (15) et le volet (16) du support (1) sont disposés à angle droit lorsque le boîtier d'affichage (2) est en service.

5. Support (1) selon l'une quelconque des revendications précédentes, **caractérisé en ce que** le plateau (15) et le volet (16) du support (1) sont alignés lorsqu'ils sont configurés pour démonter le boîtier.

6. Support (1) selon l'une quelconque des revendications précédentes, **caractérisé en ce que** le plateau (15) possède une liaison pivotante autour d'un axe (19) à son extrémité arrière.

7. Support (1) selon l'une quelconque des revendications précédentes, **caractérisé en ce que** le plateau (15) comprend un rack (17) de maintien du boîtier d'affichage (2).

8. Support (1) selon l'une quelconque des revendications précédentes, **caractérisé en ce que** le boîtier d'affichage (2) est fixé sur le rack (17) par des vis (18) en façade.

9. Support (1) selon l'une quelconque des revendications précédentes, **caractérisé en ce que** le plateau (15) et le volet (16) du support (1) sont disposés à angle droit et maintenus par des vis (22, 23) en façade en prise dans des goussets (24) du plateau (15) et dans la traverse interne de baie (7).

10. Véhicule comprenant un support (1) comportant un boîtier d'affichage (2) et une source lumineuse destinée à engendrer une information à afficher, selon l'une quelconque des revendications 1 à 9.

## Patentansprüche

1. Halterung (1), die ein Anzeigegehäuse (2) umfasst, das eine Lichtquelle umfasst, die dazu bestimmt ist, eine Information, die anzuzeigen ist, zu erzeugen, und eine versenkbare Anzeige, die die Information zu dem Fahrer des Fahrzeugs zurückstrahlt, **dadurch gekennzeichnet, dass** der Träger (1) des Anzeigegehäuses (2) einen Sockel umfasst, der in einer ersten im Wesentlichen im rechten Winkel zusammengefalteten Position angeordnet ist, wenn es in Betrieb ist, und in einer zweiten flach aufgefalteten Position, wenn es konfiguriert ist, um das Anzeigegehäuse (2) zu demontieren.

2. Halterung (1) nach Anspruch 1, **dadurch gekennzeichnet, dass** die Halterung (1) eine Platte (15) umfasst, die durch eine Klappe (16) verlängert ist.

3. Halterung (1) nach einem der Ansprüche 1 oder 2, **dadurch gekennzeichnet, dass** die Klappe (16) um ein Scharnier (21), das mit der Platte (15) verbunden ist, beweglich ist.

4. Halterung (1) nach einem der vorhergehenden Ansprüche, **dadurch gekennzeichnet, dass** die Platte (15) und die Klappe (16) der Halterung (1) im rechten Winkel angeordnet sind, wenn das Anzeigegehäuse (2) in Betrieb ist.

5. Halterung (1) nach einem der vorhergehenden Ansprüche, **dadurch gekennzeichnet, dass** die Platte (15) und die Klappe (16) der Halterung (1) gefluchtet sind, wenn sie konfiguriert sind, um das Gehäuse zu demontieren.

6. Halterung (1) nach einem der vorhergehenden Ansprüche, **dadurch gekennzeichnet, dass** die Platte (15) eine Verbindung besitzt, die um eine Achse (19) an ihrem hinteren Ende schwenkt.

7. Halterung (1) nach einem der vorhergehenden Ansprüche, **dadurch gekennzeichnet, dass** die Platte (15) einen Einschub (17) zum Halten des Anzeigegehäuses (2) umfasst.

8. Halterung (1) nach einem der vorhergehenden Ansprüche, **dadurch gekennzeichnet, dass** das Anzeigegehäuse (2) auf dem Einschub (17) durch Schrauben (18) auf der Vorderseite befestigt ist.

9. Halterung (1) nach einem der vorhergehenden Ansprüche, **dadurch gekennzeichnet, dass** die Platte (15) und die Klappe (16) der Halterung (1) im rechten Winkel angeordnet und von den Schrauben (22, 23) auf der Vorderseite im Eingriff in Eckstücken (24) der Platte (15) und in dem inneren Querträger des Racks (7) gehalten sind.

10. Fahrzeug, das eine Halterung (1) umfasst, die ein Anzeigegehäuse (2) und eine Lichtquelle umfasst, die dazu bestimmt ist, eine Information, die anzuzeigen ist, zu erzeugen, nach einem der Ansprüche 1 bis 9.

## Claims

1. A mounting (1) comprising a display housing (2) including a light source intended for generating information to be displayed, and a retractable display reflecting the information towards the driver of the vehicle, **characterized in that** the mounting (1) of the display housing (2) comprises a base disposed in a first folded position substantially at a right angle when it is in service and in a second position, unfolded flat, when it is configured to dismantle the display housing (2).

2. The mounting (1) according to Claim 1, **characterized in that** the mounting (1) includes a plate (15) extending by a flap (16).

3. The mounting (1) according to any one of Claims 1 or 2, **characterized in that** the flap (16) is movable about a hinge (21) linked to the plate (15).

4. The mounting (1) according to any one of the preceding claims, **characterized in that** the plate (15) and the flap (16) of the mounting (1) are disposed at a right angle when the display housing (2) is in service.

5. The mounting (1) according to any one of the preceding claims, **characterized in that** the plate (15) and the flap (16) of the mounting (1) are aligned when they are configured for dismantling the housing.

6. The mounting (1) according to any one of the preceding claims, **characterized in that** the plate (15) has a pivoting connection about an axis (19) at its rear end.

7. The mounting (1) according to any one of the preceding claims, **characterized in that** the plate (15) includes a retaining rack (17) of the display housing (2).

8. The mounting (1) according to any one of the preceding claims, **characterized in that** the display housing (2) is fixed on the rack (17) by front panel screws (18).

9. The mounting (1) according to any one of the preceding claims, **characterized in that** the plate (15) and the flap (16) of the mounting (1) are disposed at a right angle and are held by front panel screws (22, 23) engaged in gussets (24) of the plate (15) and in the internal window cross-member (7).

10. A vehicle including a mounting (1) comprising a display housing (2) and a light source intended for generating information to be displayed, according to any one of Claims 1 to 9.
